# EUROPEAN PATENT APPLICATION

(11) **EP 1 646 186 A2**
(43) Date of publication of application: **12.04.2006**
(21) Application number: 05109306.0
(22) Date of filing: 06.10.2005
(51) Int. Cl.: H04L 12/28

(54) **Address allocation system**

(30) Priority: 07.10.2004 KR 2004079982
(71) Applicant: SAMSUNG ELECTRONICS CO., LTD., Suwon-si, Gyeonggi-Do 442-742 (KR)
(72) Inventor: Tanabe, Takeshi, Yeongtong-gu, Suwon-si, Gyeonggi-do (KR); Song, Dong-june, Busan City (KR)
(74) Representative: Walaski, Jan Filip

(57) **Abstract**

A method of allocating an address of a network system including a central control device (100) and a plurality of terminal devices (104) sequentially connecting to the central control device along a predetermined wiring path (105), communicating with the central control device (100), including each of the terminal devices (104) sequentially accessing the central control device (100) along the wiring path (105), and sequentially allocating, at the central control device (100), the addresses (102) to the terminal devices accessed. Accordingly, it is an aspect of embodiments of the present invention to provide a network system and a method of allocating addresses wherein addresses are automatically set and an operator can easily anticipate the set address.

## Description

The present invention relates to address allocation in a system. Particularly, but not exclusively, the invention relates to a network system and a method of allocating addresses wherein addresses are automatically set and an operator can easily anticipate the set addresses.

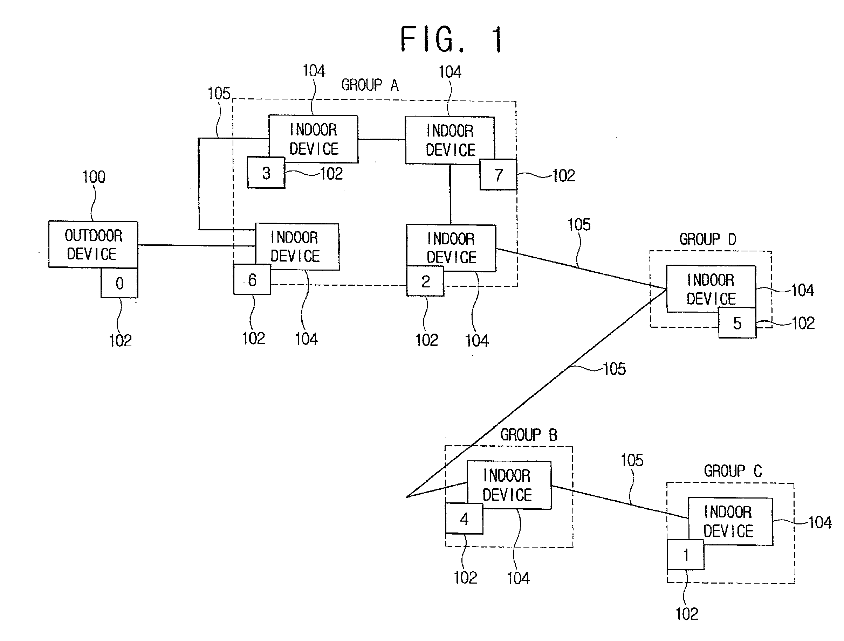

Generally a network system such as a building facility monitoring system includes a central control device and a plurality of terminal devices controlled by the central control apparatus. Figure 1 is a block diagram illustrating a construction of a general building facility monitoring system.

As illustrated in Figure 1, the building facility monitoring system generally includes an outdoor device 100 as a central control device controlling the whole system, and a plurality of indoor devices 104 having their respective addresses 102, which are controlled by the outdoor device 100. The plurality of indoor devices 104 are sequentially connected to the outdoor device 100 along a predetermined wiring path 105.

The addresses 102, identified in Figure 1, may be directly set by an operator at each of the indoor devices 104 using DIP switches (DIP-SW), or may be automatically set.

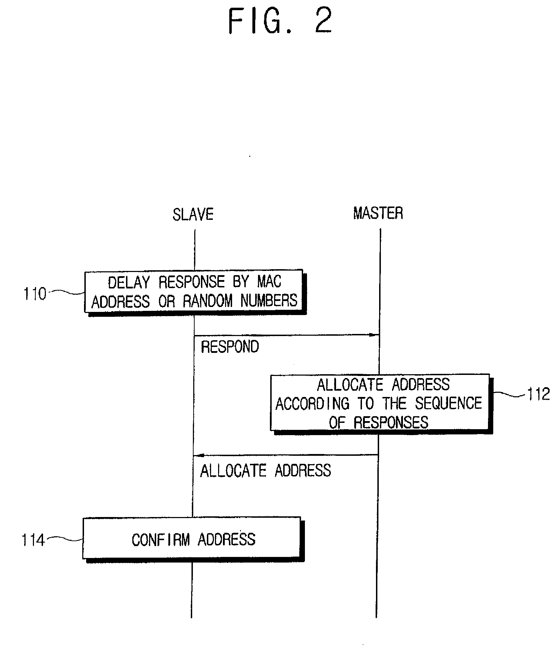

Figure 2 is a flow diagram illustrating an automatic setting of the addresses 102. For reference, Figure 2 illustrates a network system employing a master-slave mechanism.

As illustrated in Figure 2, if the outdoor device 100, as a master, requests one of the indoor devices 104 to respond, so as to allocate an address 102 to the one indoor device 104, the indoor device 104 as a slave may wait to respond for a response waiting time, generated using its own MAC address or random numbers, so that its address 102 can be automatically allocated from the outdoor device 100, in operation 110. After the response waiting time has elapsed, the indoor device 104 can attempt to send a response to the outdoor device 100, as the master. The outdoor device 100, having received a response from the indoor device 104, can then allocate addresses 102 sequentially to the indoor devices 104, e.g., starting from the indoor device 104 having the shortest response waiting time, in operation 112. Subsequently, in operation 114, the indoor devices 104 can then confirm the addresses 102.

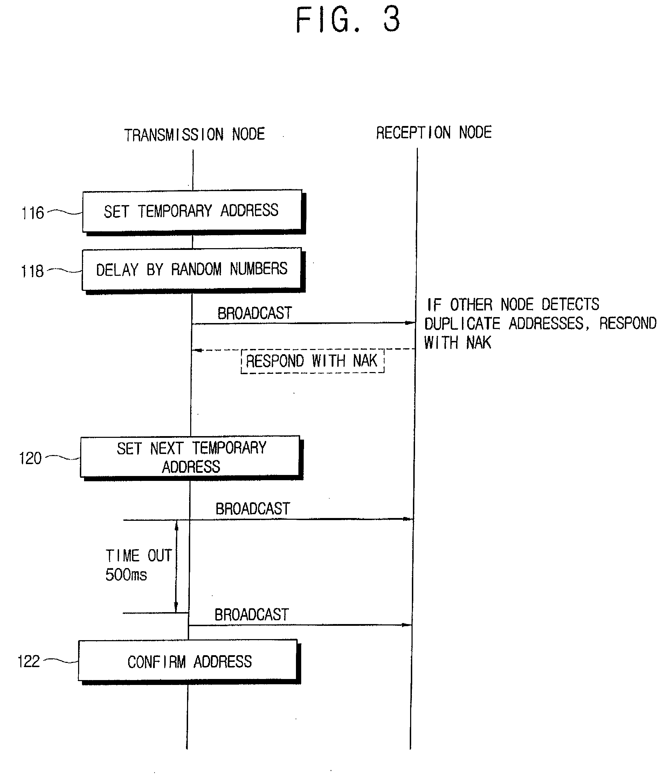

Figure 3 is a flow diagram illustrating an allocation of the addresses 102 when duplicate addresses are generated.

As illustrated in Figure 3, in operation 116, an indoor device 104 can first set its own temporary address. After the waiting time has elapsed, in operation 118, the indoor device 104 can attempt to respond to the outdoor device 100, as the master. The outdoor device 100 can then determine whether there are any duplicate addresses. If it is determined that duplicate addresses have been generated, the outdoor device 100 can inform the indoor device 104 of the duplicate address occurrence. Then, the indoor device 104 can then again set another temporary address and responsively send the new temporary address to the outdoor device 100, in operation 120. If it is determined that no duplicate addresses has been generated, in operation 122, the outdoor device 100 can confirm that the temporary address can be allocated to the indoor device 104 as the address 102.

However, this conventional method of setting the addresses 102 has several problems. In a method of directly setting addresses 102 to their respective indoor devices 104, e.g., with the use of DIP switches, it is not easy to set and confirm the address 102 if the indoor device 104 is poorly positioned in a bad location, e.g., between a ceiling and roof.

In addition, in the method of automatically allocating the addresses 102, it is difficult for an operator to know whether each of the addresses 102 are actually allocated at any given indoor device 104.

To allow the user to easily confirm the setting of the address 102, a display device may be installed on a panel of the indoor device 104 to indicate the setting, but this additional installation increases production costs.
The present invention aims to address the above problem.

According to the invention, there is provided a system according to claim 1.

To achieve the above and/or other aspects and advantages, embodiments of the present invention include a method of allocating an address in a network system including a central control device and a plurality of terminal devices, sequentially connected to the central control device along a predetermined wiring path from the central control device, communicating with the central control device, including each of the plurality of terminal devices connecting with the central control device along the wiring path, and allocating, by the central control device, respective addresses for terminal devices connected with the central control device.

The method may further include determining, at the central control device, whether a routing table exists with information on an address of a terminal device connecting with the central control device, and allocating the address to the terminal device when no routing table exists with information on the address of the terminal device.

The allocating of the addresses may include determining whether respective terminal devices connecting with the central control device have temporary addresses, when no routing table exists, and allocating the respective addresses corresponding to a positional sequence along the wiring path to the respective terminal devices, when the respective terminal devices have the temporary addresses. The allocating of the addresses may also include determining, at the central control device, whether a request to set the address is made from the terminal device, when no routing table exists, and allocating, at the central control device, the address corresponding to a positional sequence along the wiring path to the terminal device, when the request to set the address is made from the terminal device.

The method may further include confirming, at the central control device, a communication with the terminal device based on information on the address of the terminal device, stored in the routing table, determining whether the terminal device has a temporary address when the central control device has determined that communication with the terminal device is abnormal, allocating the address to the terminal device, the address being sequentially subsequent to an already allocated address, when the terminal device has the temporary address, and updating a pointer of the routing table based on the address allocated to the terminal device.

The method may still further include recognizing, at the central control device, that the terminal device has been removed or a corresponding power supply is off, if it is determined that the terminal device has no temporary address, in the determination of whether the terminal device has the temporary address when the communication with the terminal device is abnormal, and checking the terminal device whose power supply is off and updating the routing table.

The method may include confirming, at the central control device, a communication with the terminal device based on information on the address of the terminal device stored in the routing table, determining, at the central control device, whether a request to set the address has been made from the terminal device, when the central control device has determined that the communication with the terminal device is abnormal, allocating the address to the terminal device, the address being sequentially subsequent to an already allocated address, when the request to set the address is made from the terminal device, and updating a pointer of the routing table based on the address allocated to the terminal device. The method may further include recognizing, at the central control device, that the terminal device has been removed or the corresponding power supply is off if no request to set the address has been made from the terminal device, when the communication with the terminal device is abnormal, and checking the terminal device whose power supply is off and updating the routing table.

The terminal device may request the central control device to set the address for the terminal device when the terminal device has the temporary address.

The method may further include allowing a subsequent terminal device, positioned adjacent on the wiring path, to access the central control device when the terminal device has no temporary address.

To achieve the above and/or other aspects and advantages, embodiments of the present invention include a network system including a central control device and a plurality of terminal devices sequentially connected to the central control device along a predetermined wiring path from the central control device, communicating with the central control device, wherein terminal devices include a plurality of communication accessing units, one communication accessing unit for accessing the central control device and another communication accessing unit for accessing a subsequent terminal device positioned along the wiring path, an interface unit to change an access path of at least one of the communication accessing units to access either the central control device or the subsequent terminal device positioned on the wiring path, and a control unit controlling the interface unit to access the central control device when the interface unit determines that the terminal device has a temporary address or to access the subsequent terminal device positioned along the wiring path when a current address of the terminal device is not a temporary address or there is no current address, and the central control device sequentially allocates addresses to the terminal devices connecting to the central control device through the communication accessing unit.

The central control device may allocate, the subsequent terminal device, an address sequentially subsequent to an already allocated address for the terminal device, when the subsequent terminal device connects to the central control device along the wiring path through the at least one communication accessing units.

To achieve the above and/or other aspects and advantages, embodiments of the present invention include a method of allocating an address of a network system including a central control device and a first terminal device communicating with the central control device, including checking whether a routing table exists, and allocating an address to the terminal device if the routing table does not exist.

The method may further include checking whether a temporary address exists in the terminal device if the routing table does not exist, and allocating the address as an address of the first terminal device if the temporary address exists. The method may still further include allocating a second address to a second terminal device, wherein the second address may be sequentially subsequent to the address allocated to the first terminal device.

Embodiments of the invention will now be described, by way of example, with reference to the accompanying drawings, in which:
Figure 1 is a block diagram illustrating a general building facility monitoring system;
Figure 2 is a flow diagram for automatically setting addresses;
Figure 3 is a flow diagram for allocating an address when duplicate addresses have been generated;
Figure 4 is a diagram illustrating a network system, according to an embodiment of the present invention;
Figure 5 is a diagram illustrating internal constructions of an outdoor device and respective indoor devices and accesses of the outdoor device to the respective indoor devices in a network system, according to an embodiment of the present invention;
Figures 6 and 7 are diagrams illustrating interface circuits, according to embodiments of the present invention;
Figure 8 is a schematic diagram illustrating a progress of address allocation, according to an embodiment of the present invention;
Figure 9 is a diagram illustrating a network system to which an address is automatically allocated when a part of a wiring sequence is not identified, according to an embodiment of the present invention;
Figures 10 and 11 are control flow diagrams of an outdoor device and indoor devices for allocating addresses in a network system employing a master-slave mechanism, according to embodiments of the present invention; and
Figures 12 and 13 are control flow diagrams of an outdoor device and indoor devices for allocating addresses in a network system employing an event mechanism, according to embodiments of the present invention.

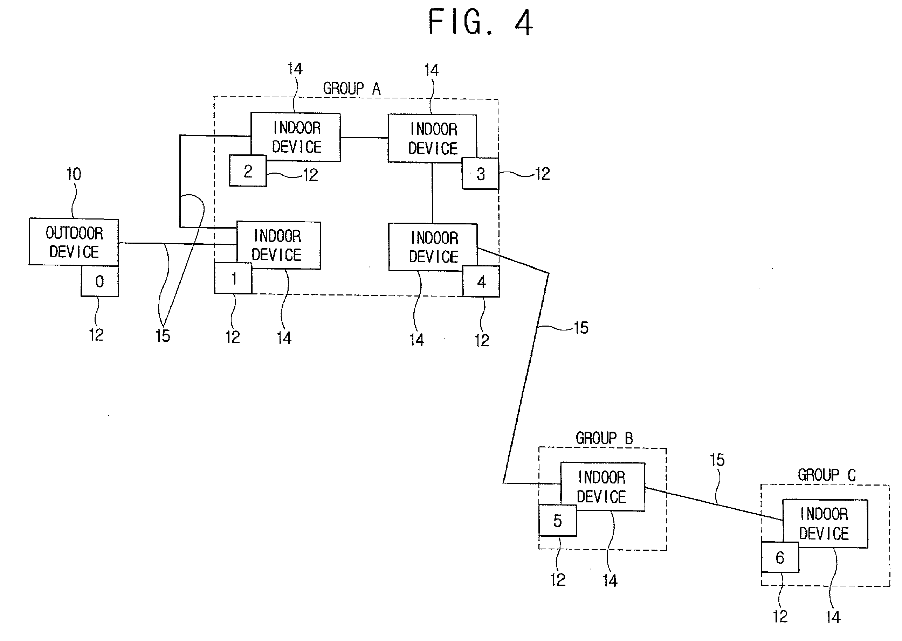

Figure 4 is a diagram illustrating a network system, according to an embodiment of the present invention. As illustrated in Figure 4, the network system may include an outdoor device 10 serving as a central control device to control a whole system, and a plurality of indoor devices 14 serving as terminal devices, connected to the outdoor device 10 sequentially along the predetermined wiring path 15, being controlled by the outdoor device 10.

Addresses 12 can be allocated to the indoor device 14 from the outdoor device 10. The addresses 12 allocated to the respective indoor devices 14 can also be increased sequentially along the wiring path 15, for example.

The network system illustrated in Figure 4 illustrates an example of allocating addresses 12 to respective indoor devices 14 along sequence of 1, 2, 3, 4, 5 and 6, from the outdoor device 10 whose address 12 may be "0", for example, along the wiring path 15.

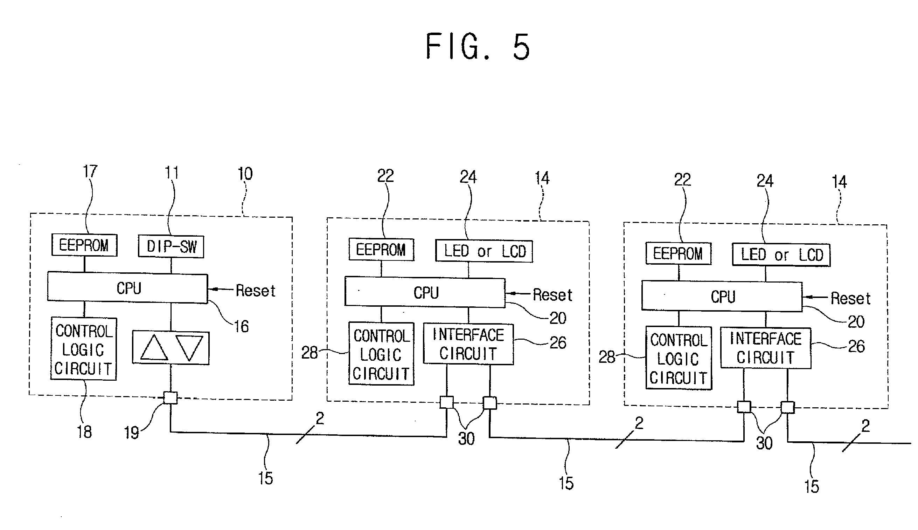

Figure 5 is a diagram schematically illustrating the outdoor device 10 and respective indoor devices 14 and accesses of the outdoor device 10 to the respective indoor devices 14 in a network system, according to an embodiment of the present invention.

The outdoor device 10 may include a communication accessing unit 19 to access the indoor device 14 for communication, an electrically erasable programmable read only memory (EEPROM) 17, which is a memory storing therein a routing table, a control logic circuit 18 to process internal signals, and a central processing unit (CPU) 16 to control the outdoor device 10. The outdoor device 10 may further be provided with a switch 11, e.g., a DIP switch, to allow an operator to directly set an address 12 particular to the outdoor device 10.

In a network system employing a master-slave mechanism, the CPU 16 of the outdoor device 10 may determine whether the routing table is stored in the EEPROM 17 when there is any input manipulated from a manipulation input device (not shown) provided on the outdoor device 10 or an initial power supply is applied to the outdoor device 10.

Existence of the routing table indicates that the addresses 12 have been allocated to indoor devices 14 having accessed the outdoor device 10. Non-existence of the routing table indicates an initial state where an address 12 has not been allocated to an indoor device 14 attempting to access the outdoor device 10.

For reference, the indoor devices 14 can have respective temporary addresses when an address 12 has not been allocated.

In the case of the non-existence of the routing table, the CPU 16 can determine whether indoor devices 14 having a temporary address exist. The CPU 16 thereafter, accordingly, allocates addresses 12 to such temporary addresses existing in the indoor devices 14.

In the case of the existence of the routing table, the CPU 16 can confirm the addresses 12 through communication with the indoor devices 14 based on the routing table. The routing table can store therein information about addresses 12 for each indoor device 14 along the wiring path 15.

In confirming communication with the indoor devices 14, according to the routing table, the outdoor device 10 may send a signal to each indoor device 14 requesting confirmation, according to the stored address 12, so as to confirm the address 12 of each indoor device 14, for example, by sequentially accessing the outdoor device 10 along the wiring path 15. Where a response signal is received from the indoor device 14, the outdoor device 10 can then determine that communication with that indoor device 14 is normal. Where it is determined that communication is abnormal, for example, where no response is received from the indoor devices 14, the CPU 16 can recognize any one of the following cases as having occurred: indoor devices 14 having new temporary addresses may be attempting to access the outdoor device 10, the indoor device 14 may have been removed from the communication path to the outdoor device 10, and/or supply of power to the indoor device 14 may have been cut off.

When it is determined that the indoor devices 14 having a new temporary address are attempting to access the outdoor device 10, the CPU 16 can allocate an address 12 to the indoor device 14. At this time, the allocated address 12 may be the next available address in a predetermined address sequence, for example the next address in a sequence following the address 12 previously allocated.

The process of allocating an address 12 for an indoor device 14 may be applicable to a network system employing an event mechanism, for example. In the network system employing the event mechanism, the CPU 16 of the outdoor device 10 may perform an operation to allocate an address 12 for the indoor device 14 when a request to set an address is made from the indoor device 14.

Each indoor device 14 may include a communication accessing unit 30 formed with a detachable connector to access the outdoor device 10 or a previous indoor device 14 on the wiring path 15 for communication, or any subsequent indoor device 14 on the wiring path 15 for communication, an EEPROM 22 which may store therein information about addresses (temporary addresses and/or addresses 12), a control logic circuit 28 to process internal signals, a light emitting diode (LED) or a liquid crystal display (LCD) 24 to display a state of the indoor device 14 thereon, an interface circuit 26 to change a connection path with the communication accessing unit 30, and a CPU 20 performing predetermined control based on communication with an external remote control (not shown) and/or the outdoor device 10.

In the network system, including the master-slave mechanism, the CPU 20 may determine whether its own address is a temporary address when an initial power supply is applied thereto. Where the address is a temporary address, the CPU 20 can control the interface circuit 26 to communicate with the communication accessing unit 19 on the outdoor device 10 side and receive the address 12 allocated from the outdoor device 10. Where the address is not temporary, the CPU 20 can control the interface circuit 26 to permit the subsequent indoor device 14 to be connected to the outdoor device 10.

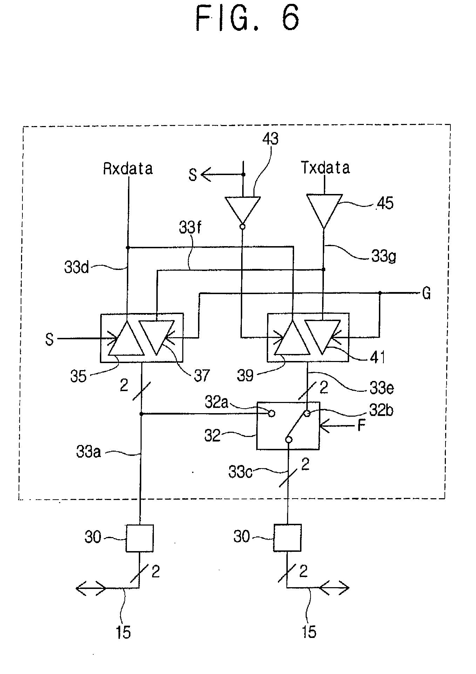

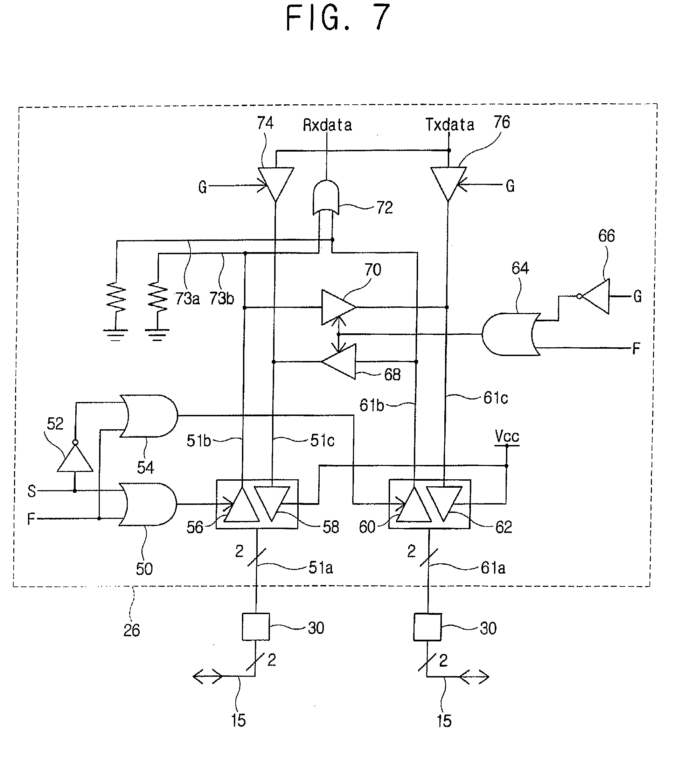

Meanwhile, in a network system employing the event mechanism, the CPU 20 may request that the outdoor device 10 set an address 12, where the indoor device's 14 own address is a temporary address, when power is initially supplied to the indoor device 14, and then may receive the allocated address 12, and stores the address 12 in the EEPROM 22. After storing the address 12, the CPU 20 can control the interface circuit 26 so that a subsequent indoor device 14 is connectable to the outdoor device 10. The interface circuit 26 will be described in further detail with reference to Figures 6 and 7.

As illustrated in Figure 6, the interface circuit 26 refers to an interface circuit using a mechanical relay 32, for example, which is appropriate for an interface employing a carrier sensing multiple access/collision detection (CSMA) mechanism, such as a home bus system (HBS).

For description, herein it will be assumed that the indoor device 14 having the interface circuit 26, illustrated in Figure 6, refers to a first indoor device 14, with the outdoor device 10 being connected to the left side of the first indoor device 14, and with a second indoor device 14 being connected to the right side of the first indoor device 14, such as illustrated in Figure 5.

When the first indoor device 14 is connected to the outdoor device 10, the CPU 20 controls a control signal F to allow a contact of a relay 32 to be switched into a contact 32b.

Where data is received from the outdoor device 10, the CPU 20 can control a control signal S. Since a 3-phase buffer 35, operating according to the control signal S, transmits the input to the output when S="1", the CPU 20 can output a logic signal S="1" so that the 3-phase buffer 35 outputs data input through a signal line 33a, through a signal line 33d. Accordingly, the indoor device 14 can receive data from the outdoor device 10.

Also, transmission data (Txdata) output from the CPU 20 of the first indoor device 14 can be output to signal lines 33g and 33f through a buffer 45 and then input into a 3-phase buffer 37. At this time, the CPU can control a control signal G so that the transmission data input into the 3-phase buffer 37 can be output to the outdoor device 10 through the signal line 33a.

Accordingly, the first indoor device 14 may be available for transmission and reception of data with the outdoor device 10, and may be available to receive the address 12 allocated from the outdoor device 10.

Meanwhile, when the CPU 20 of the first indoor device 14 determines that it has received the address 12, allocated from the outdoor device 10, the CPU 20 can control the control signal F to thereby allow a contact of a relay 32 to be switched into 32a from 32b, for example.

If the contact of the relay 32 is switched from 32a from 32b, by the control signal F, the signal lines 33a and 33c become connected with each other, thereby allowing a pair of communication accessing units 30 to be directly connected. Accordingly, the outdoor device 10, connected with the communication accessing unit 30 connected to the signal line 33a of the first indoor device 14, and the second indoor device 14, connected to the communication accessing unit 30 connected to the signal line 33c of the first indoor device 14, become connected with each other.

Through these operations, a plurality of indoor devices 14 can be sequentially connected to the outdoor device 10 along the wiring path 15.

3-phase buffers 39 and 41 and an inverter 43 provided on the interface circuit 26 can be provided so as to allow the first indoor device 14 to communicate with the second indoor device 14 connected to the communication accessing unit 30 connected to the signal line 33c.

Where the first indoor device 14 does not communicate with the outdoor device 10 but communicates with the second indoor device 14, positioned on the adjacent wiring path 15, the CPU 20 of the first indoor device 14 can control the control signal F so as to allow the relay 32 to be switched into the contact 32b. Further the CPU 20 can apply a control signal S="0" so as to allow data input from the second indoor device 14 through signal lines 33c and 33e to be received through the 3-phase buffer 39, whereas the CPU 20 can apply G="1" so as to allow data output from the CPU 20 through the signal line 33g to be output to the signal lines 33e and 33c through the 3-phase buffer 41.

Before describing the interface circuit 26 illustrated in Figure 7, it will be assumed herein that the indoor device 14 having the interface circuit 26 of Figure 7 refers to a first indoor device 14, with the outdoor device 10 being connected to the left side of the first indoor device 14, and with the second indoor device 14 being connected to the right side of the first indoor device 14, such as that illustrated in Figure 5. The CPU 20 of the first indoor device 14 can apply control signals F="0", S="1" and G="1" so as to allow the first indoor device 14 to connect to the outdoor device 10 to transmit and receive data.

Then, an OR gate 50 receiving the control signals S and F, as inputs, outputs "1" and applies it to a 3-phase buffer 56, to thereby enable the 3-phase buffer 56. The control signal F and the control signal S, inverted by an inverter 52 are input to an OR gate 54. The OR gate 54 outputs "0" to a 3-phase buffer 60, to thereby disable the 3-phase buffer 60.

In the meantime, 3-phase buffers 58 and 62 receiving the input Vcc can always be enabled and an OR gate 64 can receive the control sign F and the control signal G inverted by an inverter 66 to output "0" and apply it to 3-phase buffers 68 and 70, thereby disabling the 3-phase buffers 68 and 70.

Also, 3-phase buffers 74 and 76 to which the control signal G is applied can be enabled.

Accordingly, the data input from the outdoor device 10 can be input into an OR gate 72 through signal lines 51a and 51b. Also, into another input terminal of the OR gate 72, a low signal can be input through a signal line 73a. Accordingly, the data finally received by the CPU 20 refers to the data from the outdoor device 10 input through the signal line 51b.

The transmission data (Txdata) output from the CPU 20 of the first indoor device 14 can be output to the outdoor device 10 through the signal lines 51 c and 51 a. According to this, the first indoor device 14 can be allocated an address 12 from the outdoor device 10.

After the first indoor device 14 has been allocated the address 12, from the outdoor device 10, the CPU 20 of the first indoor device 14 can apply control signals F="1", S="0" or "1", and G="0".

Then, the OR gate 50, having received the control signal S and F as inputs, outputs "1" and applies it to the 3-phase buffer 56, to thereby enable the 3-phase buffer 56. The OR gate 54 receives the F signal and the S signal, inverted by the inverter 52, as inputs and outputs "1" to the 3-phase buffer 30, to thereby enable the 3-phase buffer 60.

In the meantime, 3-phase buffers 58 and 62, having received input Vcc, can always be enabled and the OR gate 64 can receive the F signal and the G signal inverted by an inverter 66 to output "1" and apply it to the 3-phase buffers 68 and 70, thereby enabling the 3-phase buffers 68 and 70.

Also, 3-phase buffers 74 and 76 to which the G signal is applied are disabled. Accordingly, the data input from the outdoor device 10 can be input into the 3-phase buffer 70 through signal lines 51a and 51b and output to the second indoor device 14 through signal lines 61c and 61a. The data input from the second indoor device 14 through the signal line 61a are input into the 3-phase buffer 68 through a signal line 61b and output to the outdoor device 10 through the signal lines 51c and 51a.

Accordingly the outdoor device 10 can be connected to the second indoor device 14, thereby being available for data transmission and reception.

In the interface circuits 26 illustrated in Figures 6 and 7, the 3-phase buffers 35, 37, 39, 41, 56, 58, 60, 62, 68, 70, 74 and 76 may be constructed with control switches, for example.

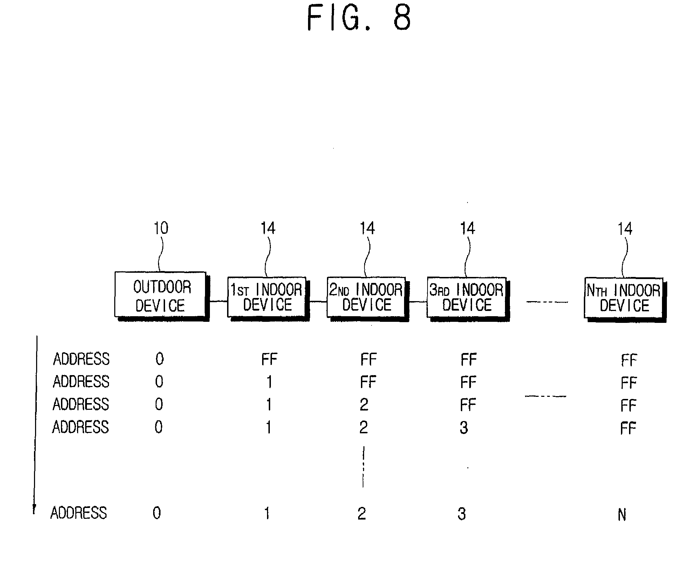

According to this construction, Figure 8 illustrates that addresses can incrementally increase as the number of indoor devices 14 connected to the outdoor device 10 increases.

For example, when the first indoor device 14 is connected to the outdoor device 10 whose address 12 can be 0, 1 can be allocated to the first indoor device 14 as the respective address 12. When the second indoor device 14 is additionally connected, 2 can be allocated as the respective address 12. When the third indoor device 14 is connected, 3 can be allocated as the respective address 12, and when the nth indoor device is connected, N can be allocated as the respective address 12, noting that alternative addressing schemes are also available.

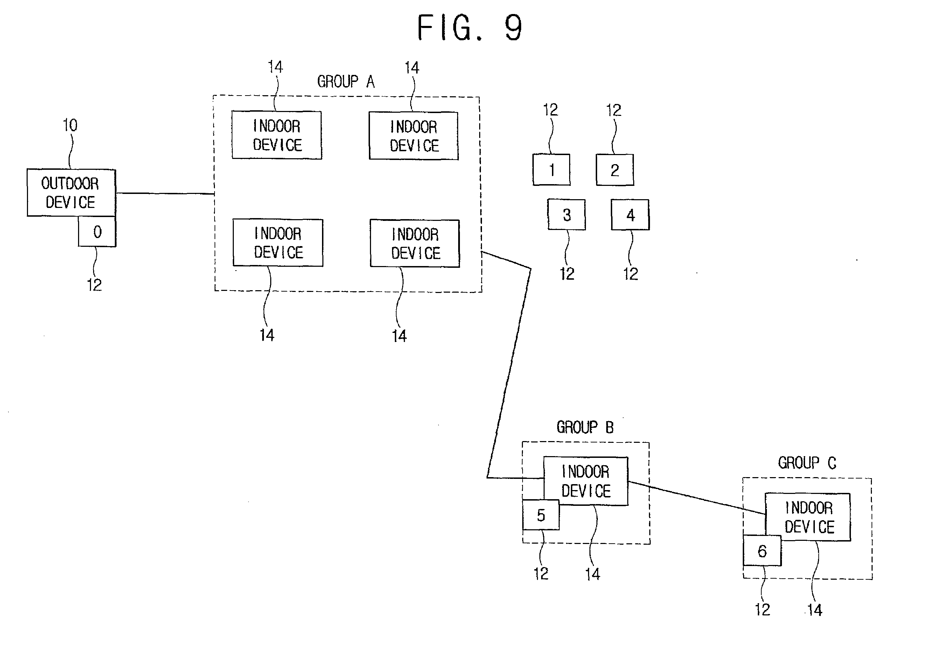

Where the distance between the indoor devices 14 are short, since the addresses, as grouped, may be sequenced along wiring path 15, within their respective groups, the addresses 12 can be sequentially allocated within a group as illustrated in Figure 9, although the wiring path 15 is not illustrated.

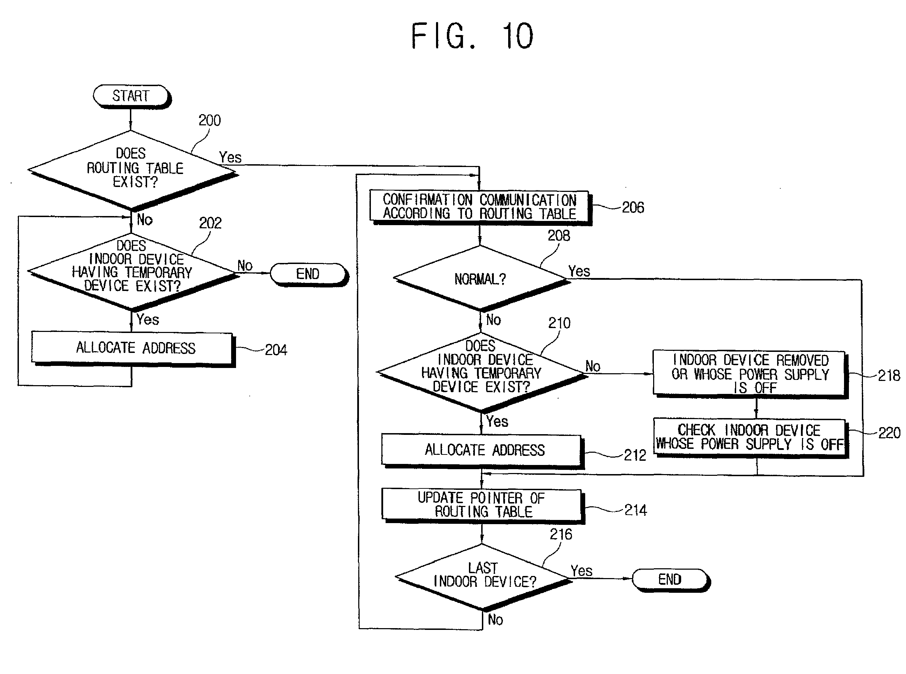

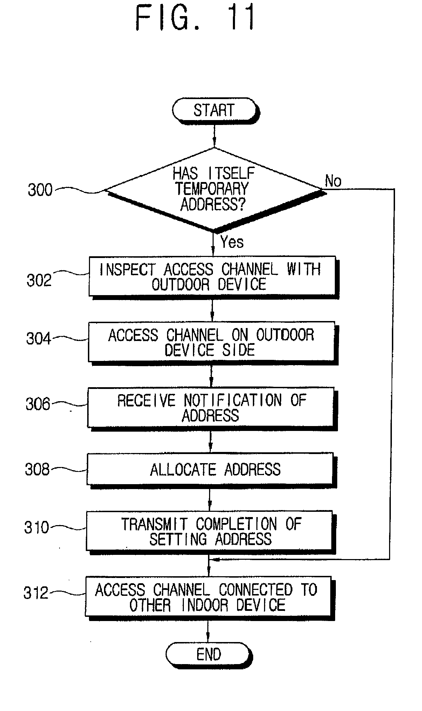

Figures 10 and 11 are control flow diagrams of the outdoor device and the indoor devices for allocating addresses in a network system employing a master-slave mechanism, for example. Specifically, Figure 10 is a control flow diagram for the outdoor device 10 and Figure 11 is a control flow diagram for the indoor device 14.

As illustrated in Figure 10, in operation 200, the CPU 16 of the outdoor device 10 can determine whether a routing table exists in the EEPROM 17, at an input by an input device (not shown) provided on the outdoor device 10, or a signal from a remote control or at initial power-up, for example.

As a result of determination, if the routing table does not exist, for example, in operation 202, the outdoor device 10 can determine whether an indoor device 14 with a temporary address exists. Where there exists an indoor device 14 having a temporary address, in operation 204, the outdoor device 10 can allocate an address to the indoor device 14, and thereafter can repeat the above operations for other indoor devices.

Where there exists a routing table, the outdoor device 10 can confirm the address 12 through a communication with the indoor device 14, according to the routing table, in operations 206 and 208.

Where it is confirmed that a communication is abnormal, as a result of the attempted communication based on the routing table, the outdoor device 10 can determine whether there exists the indoor device 14 having the temporary address, in operation 210. This is a process to determine whether there is any indoor device which has newly attempted to access the outdoor device, but to which no address 12 is allocated.

Where there exists the indoor device 14 having the temporary address, the outdoor device 10 can allocate the address 12 to the indoor device 14, in operation 212, and can then update a pointer of the routing table, in operation 214. Further, the outdoor device 10 can then determine whether the indoor device 14, to which the address 12 has been allocated, is the last indoor device 14 making up a network of a system, in operation 216. Where the indoor device 14 is not the last indoor device, the outdoor device 10 can return to operation 206, confirming communication according to the routing table. Where the indoor device 14 is the last indoor device, the outdoor device can terminate the operations of allocating the address 12.

Where a communication with the indoor device 14 is abnormal, and there exists no indoor device 14 having a temporary address, as a result of communication, the outdoor device 10 can determine that the respective indoor device 14 has been removed or the respective power supply is off, in operation 218. The outdoor device 10 can then check the indoor device 14 whose power supply may be off, in operation 220, and may update a pointer of the routing table, in operation 214.

Where the indoor device 14 is the last indoor device, in operation 216, the outdoor device 10 can terminates the process of allocating the address 12. Where the indoor device 14 is not the last indoor device, the outdoor device 10 can repeat the process of confirmation through communication with the indoor device 14 according to the routing table.

In addition, where it is confirmed that the communication with the indoor device 14 is normal, as a result of the communication, according to the routing table, the outdoor device 10 can update the pointer of the routing table, in operation 214, and determine whether the indoor device 14 is the last indoor device, in operation 216. Where the indoor device 14 is not the last indoor device, the outdoor device 10 can repeat the operations of confirmation through further communications according to the routing table.

As illustrated in Figure 11, the indoor device 14 can determine whether its corresponding address is temporary when an initial power supply is applied, in operation 300. Where it is a temporary address, the indoor device 14 can inspect a communication accessing unit 30, accessible to the outdoor device 10, between the two communication accessing units 30, in operation S302, thereby making the indoor device 14 access the outdoor device 10 through the communication accessing unit 30, in operation 304. If the indoor device 14 receives a notification of the address 12 by an allocating of the address by the outdoor device 10, in operation 306, the indoor device 14 stores the allocated address 12 in the EEPROM 22, in operation 308. Then, the indoor device 14 can notify the outdoor device 10 of the setting of the address 12, in operation 310. When the setting of the address 12 is completed, the indoor device 14 can change an access state of the communication accessing unit 30 so as to allow a subsequent indoor device 14 to access the outdoor device 10, in operation 312.

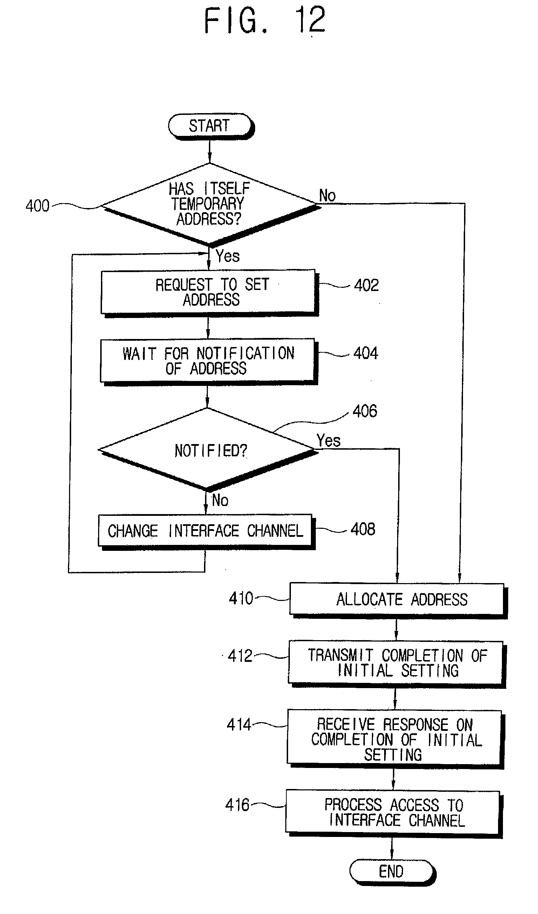

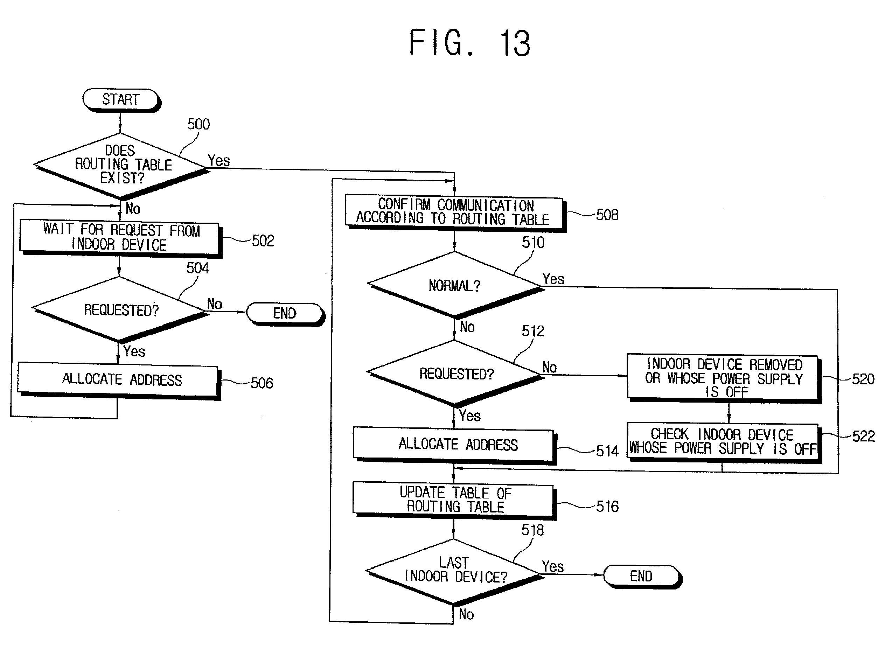

Figures 12 and 13 are respective control flow diagrams of an outdoor device and an indoor devices to allocate addresses in a network system employing an event mechanism, wherein Figure 12 is a control flow diagram of an indoor device 14 and

Figure 13 is a control flow diagram of an outdoor device 10. For reference, a network system including an event mechanism can perform an allocation of an address where a signal is first sent to the outdoor device 10 from the indoor device 14.

As illustrated in Figure 12, the CPU 20 of the indoor device 14 can determine whether an address stored in the EEPROM is a temporary address when an initial power supply is applied, in operation 400. As a result, where the stored address is determined to be a temporary address, the CPU 20 can request the outdoor device 10 to set the address 12, in operation S402, and wait for an allocation of the address 12 from the outdoor device 10, in operation 404.

Where no address 12 is allocated from the outdoor device 10, in operation 406, the indoor device 15 can change an access state of the communication accessing unit 30, in operation 408. Herein, when no address 12 is allocated from the outdoor device 10, this implies that the communication accessing unit 30 may not have accessed the outdoor device 10. Accordingly, another communication accessing unit 30 of the indoor device 14 may be instructed to attempt to access to the outdoor device 10.

Meanwhile, where the address 12 is allocated from the outdoor device 10, in operation S406, the indoor device 14 can store the address 12, transmitted from the outdoor device 10, in the EEPROM 22, in operation 410. And then, the indoor device 14 can notify the outdoor device 10 of completion of the setting of the address 12, in operation 412. If the indoor device 14 receives a response from the outdoor device 10 regarding the completed setting of the address 12 from the outdoor device 10, in operation 414, the indoor device 14 can change an access state of the communication accessing unit 30 to thereby allow a subsequent indoor device 14 to access the outdoor device 10, in operation 416.

As illustrated in Figure 13, the CPU 16 of the outdoor device 10 can determine whether a routing table exists in the EEPROM 17 when an initial power supply is applied, in operation 500. As a result, where it is determined that no routing table exists, the CPU 16 can wait for a request to set the address 12 for the indoor device 14, in operation 502. Upon a request to the outdoor device 10 to set the address 12 for the indoor device 14, in operation 504, the outdoor device 10 can allocate the address 12 to the indoor device 14, in operation 506, and the outdoor device 10 can again wait for a request to set the address 12 of the next indoor device 14.

If the routing table exists, the CPU 16 of the outdoor device 10 can confirm communication based on the routing table, in operation 508. As a result, where communication is abnormal, in operation 510, the CPU 16 of the outdoor device 10 can determine whether there is any request to set the address 12, from the indoor device 14, in operation 512. This may determine whether there exists any indoor device 14 which is newly accessible but whose address 12 has not been allocated.

When a request to set the address is made from the indoor device 14, the CPU 16 of the outdoor device 10 can allocate the address 12 to the indoor device 14, in operation 514, and then update a pointer of the routing table, in operation 516. The outdoor device 10 can determine whether the indoor device 14, to which the address 12 has been allocated, is a last indoor device 14 making up a network of a system, in operation 518. When the indoor device 14 is not the last indoor device, the outdoor device 10 can return to an operation of confirming communications according to routing table. Where the indoor device 14 is the last indoor device, operations of allocating addresses 12 are terminated.

Meanwhile, where communication is abnormal, as a result of confirmation and no request to set the address 12 being received from the indoor device 14, in operations 510 and 512, the outdoor device 10 can determine that the indoor device 14 has been removed or the indoor device's 14 power supply is off, in operation 520. Then, the outdoor device 10 can check for any indoor device 14 whose power supply is off, in operation 522, and update a pointer of the routing table, in operation 516. Where the indoor device 14 is a last indoor device of a system, in operation 518, the outdoor device 10 can terminate operations of allocating the address 12. Where the indoor device 14 is not the last indoor device, the outdoor device 10 can repeat the confirmation operations, through communication with the indoor device 14, according to the routing table.

Further, where communication is normal, as a result of confirmation according to the routing table, in operation 510, the outdoor device 10 can update the pointer of the routing table, in operation 516, and determine whether the indoor device 14 is a last indoor device of a system, in operation 518. If the indoor device 14 is not the last indoor device of the system, the outdoor device 10 can repeat the operations of confirming communications with the indoor devices 14 according to the routing table.

As described above, based on the wiring path 15, which is confirmed in the figures for the convenience of maintenance of a network system, respective indoor devices 14 can be sequentially accessing the outdoor device 14 and addresses 12 can be sequentially allocated to the indoor devices 14, thereby allowing the addresses 12 to respective indoor devices 14 to be easily anticipated in the wiring path 15. Since there is no need to separately provide a structure for external display, such as a panel or an indicator LED of the indoor device 14, embodiments of the present invention are effective in saving production costs.

Although particular embodiments of the present invention have been described, it should be understood that the present invention is not limited thereto and those skilled in the art can make various modifications and changes without departing from the scope of the invention as defined by the claims.

## Claims

1. A system comprising:
a control device (10); and
a plurality of terminal devices (14), each of the terminal devices being connected to the control device along a predetermined connection path (15);
the control device being configured to allocate respective addresses for the terminal devices in accordance with a predetermined address sequence.

2. A method of allocating an address in a network system including a central control device and a plurality of terminal devices, sequentially connected to the central control device along a predetermined wiring path from the central control device, communicating with the central control device, comprising:
each of the plurality of terminal devices connecting with the central control device along the wiring path; and
allocating, by the central control device, respective addresses for terminal devices connected with the central control device.

3. The method of claim 2, further comprising:
determining, at the central control device, whether a routing table exists with information on an address of a terminal device connecting with the central control device; and
allocating the address to the terminal device when no routing table exists with information on the address of the terminal device.

4. The method of claim 3, wherein the allocating of the addresses comprises:
determining whether respective terminal devices connecting with the central control device have temporary addresses, when no routing table exists; and
allocating the respective addresses corresponding to a positional sequence along the wiring path to the respective terminal devices, when the respective terminal devices have the temporary addresses.

5. The method of claim 3, wherein the allocating of the addresses comprises:
determining, at the central control device, whether a request to set the address is made from the terminal device, when no routing table exists; and
allocating, at the central control device, the address corresponding to a positional sequence along the wiring path to the terminal device, when the request to set the address is made from the terminal device.

6. The method of claim 3, further comprising:
confirming, at the central control device, a communication with the terminal device based on information on the address of the terminal device, stored in the routing table;
determining whether the terminal device has a temporary address when the central control device has determined that communication with the terminal device is abnormal;
allocating the address to the terminal device, the address being sequentially subsequent to an already allocated address, when the terminal device has the temporary address; and
updating a pointer of the routing table based on the address allocated to the terminal device.

7. The method of claim 6, further comprising:
recognizing, at the central control device, that the terminal device has been removed or a corresponding power supply is off, if it is determined that the terminal device has no temporary address, in the determination of whether the terminal device has the temporary address when the communication with the terminal device is abnormal; and
checking the terminal device whose power supply is off and updating the routing table.

8. The method of claim 3, further comprising:
confirming, at the central control device, a communication with the terminal device based on information on the address of the terminal device stored in the routing table;
determining, at the central control device, whether a request to set the address has been made from the terminal device, when the central control device has determined that the communication with the terminal device is abnormal; allocating the address to the terminal device, the address being sequentially subsequent to an already allocated address, when the request to set the address is made from the terminal device; and
updating a pointer of the routing table based on the address allocated to the terminal device.

9. The method of claim 8, further comprising:
recognizing, at the central control device, that the terminal device has been removed or the corresponding power supply is off if no request to set the address has been made from the terminal device, when the communication with the terminal device is abnormal; and
checking the terminal device whose power supply is off and updating the routing table.

10. The method of claim 5, wherein the terminal device requests the central control device to set the address for the terminal device when the terminal device has the temporary address.

11. The method of claim 8, wherein the terminal device requests the central control device to set the address for the terminal device when the terminal device has the temporary address.

12. The method of claim 4, further comprising allowing a subsequent terminal device, positioned adjacent on the wiring path, to access the central control device when the terminal device has no temporary address.

13. A network system comprising a central control device and a plurality of terminal devices sequentially connected to the central control device along a predetermined wiring path from the central control device, communicating with the central control device,
wherein terminal devices include a plurality of communication accessing units, one communication accessing unit for accessing the central control device and another communication accessing unit for accessing a subsequent terminal device positioned along the wiring path, an interface unit to change an access path of at least one of the communication accessing units to access either the central control device or the subsequent terminal device positioned on the wiring path, and a control unit controlling the interface unit to access the central control device when the interface unit determines that the terminal device has a temporary address or to access the subsequent terminal device positioned along the wiring path when a current address of the terminal device is not a temporary address or there is no current address, and the central control device sequentially allocates addresses to the terminal devices connecting to the central control device through the communication accessing unit.

14. The network system of claim 13, wherein central control device allocates, the subsequent terminal device, an address sequentially subsequent to an already allocated address for the terminal device, when the subsequent terminal device connects to the central control device along the wiring path through the at least one communication accessing units.

15. A method of allocating an address of a network system including a central control device and a first terminal device communicating with the central control device, comprising:
checking whether a routing table exists; and
allocating an address to the terminal device if the routing table does not exist.

16. The method of claim 15, further comprising:
checking whether a temporary address exists in the terminal device if the routing table does not exist; and
allocating the address as an address of the first terminal device if the temporary address exists.

17. The method of claim 15, further comprising:
allocating a second address to a second terminal device.

18. The method of claim 17, wherein the second address is sequentially subsequent to the address allocated to the first terminal device.

19. A network system comprising a central control means and a plurality of terminal means sequentially connected to the central control device along a predetermined communication path from the central control device, the system comprising:
a terminal means, of the plurality of terminal means, including a communication accessing means for accessing the central control device and a subsequent terminal means, of the plurality of terminal means, positioned along the communication path, an interface means to manipulate the communication accessing means to access either the central control means or the subsequent terminal means positioned on the communication path, and a control means controlling the interface means to access the central control means when the interface means determines that the terminal means has a temporary address or to access the subsequent terminal means positioned along the communication path when a current address of the terminal means is not a temporary address or there is no current address, and
the central control means sequentially allocates addresses to the plurality of terminal means connecting to the central control means through the communication accessing means.
